# EUROPÄISCHE PATENTANMELDUNG

(11) **EP 1 194 010 A2**
(43) Veröffentlichungstag der Anmeldung: **03.04.2002**
(21) Anmeldenummer: 01122761.8
(22) Anmeldetag: 21.09.2001
(51) Int. Cl.: H05B 6/04, H05B 6/06

(54) **Umrichterschaltung und Verfahren zum Betrieb einer solchen**

(30) Priorität: 29.09.2000 ES 200002440
(71) Anmelder: BSH Balay, S.A., 50059 Zaragoza (ES)
(72) Erfinder: Garcia Jimènez, José Ramon, 50009 Zaragoza (ES); Monterde Aznar, Fernando, 50013 Zaragoza (ES); Hernandez Blasco, Pablo Jesus, 50017 Zaragoza (ES); Burdio, Jose Miguel, 50005 Zaragoza (ES)
(74) Vertreter: Richter, Harald, Dr.

(57) **Zusammenfassung**

Umrichterschaltung vom ZCS-Typ mit mindestens zwei Ausgängen zur Verbindung mit je einer Last (L₁...L_{N}; L1-R1, L2-R2), insbesondere einer Induktionsspule einer induktiven Kochstelle, der eine Serienkapazität (C₁...C_{N}; C1, C2) zugeordnet ist, wobei jeder Ausgang über Umschalter (R₁₁...R_{NN}; R1, R2) zur Veränderung der Topologie zur wählbaren Speisung einer Last an einem ausgewählten Ausgang oder mehrerer Lasten an mehreren Ausgängen mit einem oder mehreren elektronischen Hochfrequenzschaltern (S₁...S_{N}; SW1, SW2), deren Gesamtanzahl der Anzahl der Ausgänge entspricht, mit Leistungs-Halbleiterbauelementen verbindbar ist.

## Beschreibung

Die Erfindung betrifft eine Umrichter- bzw. Inverterschaltung, insbesondere für eine Induktionskochstelle, nach dem Oberbegriff des Anspruchs 1 sowie ein Betriebsverfahren für eine solche.

Kochstellen mit induktiver Heizung, die nachfolgend als Induktionskochstellen bezeichnet werden, werden mit einer in der Kochplatte oder Kochfläche angeordneten Induktionsspule betrieben, die in einem das Kochgut enthaltenden Behälter, der ein ferromagnetisches Material aufweist, Induktionsströme erzeugt. Durch die Wirkung der Induktionsströme und der Ummagnetisierungen in der Wandung des Kochgefäßes wird der Behälter und damit das Kochgut erwärmt. Derartige Kochstellen haben einen wesentlich höheren Wirkungsgrad als andere elektrisch betriebene Kochstellen, bleiben im Betrieb "kalt" und stellen geringere Anforderungen an die Ebenheit des Topfbodens.

Die Energieversorgung von Induktionskochstellen erfolgt in der Regel von einer Stromquelle, die einen Wechselstrom mit einer Amplitude (Spitze-Spitze) von ca. 18 bis 45 A und einer Frequenz zwischen 25 und 40 kHz liefert, und die Leistung einer einzelnen Kochstelle liegt im Bereich zwischen 300 W und 3 kW. Die in den meisten Industrieländern erhältlichen Induktionskochgeräte haben zwischen zwei und vier Induktionskochstellen, die auch mit herkömmlichen Kochstellen kombiniert sein können. Bei modernen Geräten dieser Art umfassen einzelne oder alle Kochstellen zwei konzentrisch zueinander spiralig gewickelte Induktivitäten, von denen die äußere der inneren wahlweise zuschaltbar ist. Die Bereitstellung der vergleichsweise hochfrequenten Betriebsströme erfolgt durch Inverterschaltungen (Umrichter).

Die Technik der Ansteuerung von Induktionskochstellen bzw.-geräten - üblicherweise über Leistungshalbleiterschaltungen - ist wegen der o. g. Vorteile seit längerem Gegenstand intensiver Entwicklungsarbeiten, die insbesondere die Ziele einer weiteren Erhöhung des Wirkungsgrades und einer Senkung des Bauelement- und Schaltungsaufwandes und damit der Gestehungskosten sowie schließlich einer weiteren Erhöhung des Gebrauchswertes für den Nutzer verfolgen.

Unter dem letztgenannten Gesichtspunkt beschreibt die EP 0 286 044 A2 eine Schaltung zur Stromversorgung einer induktiven Kochstelle, die die Umschaltung der Stromquelle auf zwei Kochplatten unter Vermeidung von lästigen Störgeräuschen durch zwei über einen Mikroprozessor gesteuerte Relais realisiert. Die Vermeidung der Umschaltgeräusche wird hier durch die Umschaltung der Kochplatten im Umgebungsbereich des Nulldurchgangs der Netzspannung erreicht, wozu der Mikroprozessor eine entsprechende Information von der Stromquelle erhält.

Die EP 0 583 519 A1 beschreibt ein Induktionskochgerät mit zwei Induktionsspulen, denen gemeinsam ein Halbbrückenumrichter zugeordnet ist, an den sie über ein Relais alternierend anschließbar sind. In der DE 196 54 268 C2 wird eine Weiterentwicklung dieser Anordnung beschrieben mit der eine kompaktere Steuerschaltung bereitgestellt werden soll. Neben den erwähnten Induktionsheizspulen (induktiven Lasten) hat das Kochgerät einen Gleichrichter und eine Umrichterschaltung mit mindestens drei an den Gleichrichter angeschlossenen und in Reihe geschalteten Leistungstransistoren, zu denen jeweils eine Diode antiparallel und ein Hilfsresonanzkondensator parallel geschaltet sind. Weiter hat es in Zuordnung zu jeder Induktionsheizspule jeweils einen Hauptresonanzkondensator sowie Hilfsdioden, die jeweils zwischen einem Eingang eines Hauptresonanzkondensators und einem Gleichrichterausgang liegen, derart, daß beim Betrieb der einen Induktionsheizspule die andere nicht mit Spannung versorgt wird.

In der EP 0 724 379 wird ein Steuergerät für Induktionskochstellen mit mehreren Heizelementen beschrieben, die eine Mehrzahl von parallel zueinander anschließbaren Induktionsspulen aufweisen. Dieses Steuergerät hat vier Ausgänge und ermöglicht in differenzierter Weise separate Ansteuerungen sowie Zusammenschaltungen mehrerer Induktionsspulen. Die Umrichterschaltung umfaßt im wesentlichen zwei elektronische HF-Schalter, bis zu vier induktive Lasten, eine Resonanzkreis-Kondensatorbatterie und bis zu vier einpolige Umschalter.

In der EP 0 986 287 A2 werden eine Inverterschaltung mit zwei Ausgängen sowie ein Verfahren zur Steuerung der in deren Ausgänge eingespeisten Leistung beschrieben, mit denen wahlweise eine Last oder zwei Lasten gleichzeitig (insbesondere Induktionsheizspulen von induktiven Kochstellen) versorgt werden sollen. Mit der dort vorgeschlagenen Umrichterschaltung und dem zugehörigen Steuerverfahren sollen die Dimensionierung der Umschalter und Leistungs-Halbleiterbauelemente sowie die Steuerung der Leistungsversorgung der Induktionsspulen optimiert und die Geräuschentwicklung minimiert werden. Der dort vorgeschlagene Inverter ist vom unsymmetrischen, dreiphasigen H-Brückentyp mit einem gemeinsamen Zweig und zwei voneinander unabhängigen Zweigen, die Leistungsbauelemente umfassen. Er hat zwei die Topologie verändernde Umschalter zur wahlweisen Steuerung einer der beiden Induktionsspulen oder beider gleichzeitig. Zwischen jeder Spule und dem gemeinsamen Zweig sind in Serienschaltung Kondensatoren zur Reduzierung des mittleren Stromflusses durch die Leistungs-Halbleiterbauelemente (Transistoren) vorgesehen.

Aus der EP 0 971 562 A1 ist eine Mehrspulenanordnung für Induktionskochstellen bekannt, die die Herstellung von Kochgeräten für den Heimgebrauch und den professionellen Einsatz mit identischen Induktionsspulen und Umrichter- bzw. Wandlerschaltungen erlaubt.

Diese Anordnungen haben - neben vielen weiteren Entwicklungsergebnissen - Fortschritte bei der Lösung der oben erwähnten allgemeinen Aufgaben gebracht, jedoch bisher nicht zu einem massenhaften Einsatz von Induktionskochstellen im privaten oder kommerziellen Bereich führen können.

Der Erfindung liegt daher die Aufgabe zugrunde, eine weiter verbesserte Umrichterschaltung der gattungsgemäßen Art sowie ein effizientes Betriebsverfahren für eine solche anzugeben, mit denen der Aufwand zur Realisierung einer flexiblen Steuerung mehrerer Lasten (Kochstellen bzw. Induktionsspulen) weiter verringert und deren Betrieb noch effizienter und nutzerfreundlicher gestaltet werden kann.

Diese Aufgabe wird hinsichtlich ihres Vorrichtungsaspektes durch eine Umrichterschaltung mit den Merkmalen des Anspruchs 1 und hinsichtlich ihres Verfahrensaspektes durch ein Betriebsverfahren mit den Merkmalen des Anspruchs 9 gelöst.

In ihrem Vorrichtungsaspekt schließt die Erfindung den wesentlichen Gedanken einer partiellen Duplizierung einer herkömmlichen Invertertopologie zur Ausbildung einer Topologie mit mehreren Ausgängen ein. Dupliziert bzw. multipliziert werden hierbei diejenigen Abschnitte der bekannten Topologie, die eine unabhängige Steuerung der Ausgänge ermöglichen. Die Ausführung dieser partiellen Duplizierung erfordert die Identifizierung der zur Steuerung des Ausgangs notwendigen Abschnitte der ursprünglichen Topologie. Die durch dieses Vorgehen geschaffene Topologie kann durch Einführung zusätzlicher Umschalter (Kommutatoren) optimiert werden, durch die inaktive Ausgänge wahlweise zur Speisung aktiver,Ausgänge umkonfiguriert werden können. Dies ermöglicht eine Erhöhung des Umrichtungs- bzw. Konversions-Wirkungsgrades und eine (weitere) Reduzierung der Betriebstemperatur der Leistungsbauelemente im Sinne der oben genannten Aufgabe.

Die Erfindung schließt desweiteren den Gedanken der Benutzung und Modifikation einer Umrichterstruktur vom Brücken- bzw. Halbbrückentyp zur Bildung einer Umrichtertopologie mit mehreren Ausgängen ein. Sind alle Schalter der Brücken-Topologie zur Steuerung des Ausgangs erforderlich, gibt es keinen durch eine Topologie mit mehreren Ausgängen gemeinsam zu nutzenden Abschnitt, d. h. für die Topologie mit mehreren Ausgängen führt das Prinzip der partiellen Duplizierung zu einer Duplizierung (bzw. Multiplizierung) der Anzahl der Konfigurationsumschalter bzw. Kommutatoren.

Die wesentlichen Entwurfsprinzipien der Erfindung ermöglichen eine vorteilhafte Steuerung nicht nur von Induktionskochgeräten, sondern auch von anderen elektrischen Geräten, bei denen Inverterschaltungen mit mehreren Ausgängen eingesetzt werden können-beispielsweise von Elektromotoren mit mehreren Wicklungen bzw. Haupt- und Hilfswicklungen, Transformatoranordnungen mit mehreren Wicklungen und/oder Haupt- und Hilfswicklungen sowie Beleuchtungsanordnungen.

Unter dem Blickwinkel des Betriebsverfahrens schließt die Erfindung den Gedanken ein, eine Steuerstrategie mit gleicher Frequenz für alle Ausgänge des Umrichters vorzusehen. Eine geeignete Steuerstrategie soll eine Reduzierung der Verluste über den gesamten Leistungsbereich und damit der Anforderungen an die Kühlung und/oder die Bauelementespezifikationen unter Beibehaltung der in der vorgeschlagenen Konfiguration liegenden Vorteile erbringen. Diese - weiter unten genauer erläuterte - Strategie kann als einpolige Spannungsunterdrückung bzw. -aufhebung bezeichnet werden.

Im Kontext der oben genannten partiellen Duplizierung geht die vorgeschlagene Umrichterschaltung von einer Umrichterschaltung des ZCS-Typs mit einem Ausgang aus, wie sie zur Speisung einer induktiven Last mit hochfrequentem Wechselstrom - beispielsweise der Induktionsspule einer Induktionskochstelle - an sich bekannt ist. Umrichterschaltungen dieser Art weisen elektronische Hochfrequenzschalter mit Halbleiter-Leistungsbauelementen auf, die jeweils über eine Steuerschaltung angesteuert werden und trotz der ständigen Fortschritte der Halbleitertechnologie noch immer relativ kostenaufwendig sind.

Da die vorgeschlagene und beanspruchte Anordnung eine Verringerung der Bauelementanzahl ermöglicht, erbringt sie eine Kostensenkung der Umrichterschaltung. Zudem verbessert sie die Steuerbarkeit einer Anordnung aus mehreren induktiven Lasten und die Ausnutzung der vorhandenen Resonanzkondensatoren bzw. Kondensatorbatterien. Die Schalter werden nur betätigt, wenn der Leistungsbedarf einer der Lasten sich auf Null oder von Null ausgehend ändert, was tendenziell die Lebensdauer erhöht. Die Rekonfigurierbarkeit der Anordnung, d. h. die Möglichkeit einer Nutzung der einem inaktiven Ausgang zugeordneten Elektronik zur Versorgung eines aktiven Ausgangs, ermöglicht eine Verringerung der Verluste am aktiven Ausgang und eine Erhöhung der zulässigen Leistung an den Ausgängen.

Ein speziell für Induktionskochgeräte wichtiger Spezialfall der erfindungsgemäßen Umrichterschaltung ist eine solche mit zwei Ausgängen, die über zwei einpolige Umschalter wahlweise mit einem von zwei elektronischen Hochfrequenzschaltern oder beiden Hochfrequenzschaltern verbindbar sind. Da Induktionskochgeräte üblicherweise mit zwei oder vier induktiven Kochstellen ausgestattet sind, ermöglichen oder zwei solche Umrichterschaltungen(en) die Speisung eines kompletten Induktionskochgerätes oder Kombinations-Kochgerätes mit dem benötigen hochfrequenten Wechselstrom.

Bei der konkreten schaltungstechnischen Realisierung einer solchen Umrichterschaltung mit zwei Ausgängen sind zu unterscheiden eine Variante I, bei der die Serienkapazitäten über die Umschalter wahlweise mit den Hochfrequenzschaltern verbindbar sind, und eine Variante II, bei der die Serienkapazitäten permanent mit den Hochfrequenzschaltern verbunden sind.

Die Hochfrequenzschalter weisen - in an sich bekannter Weise - jeweils eine Serienschaltung aus einem Leistungstransistor und einer Diode auf, und die Umschalter können in bewährter Weise als elektromechanische Relais ausgebildet sein. Weiterhin hat die Schaltung ein induktives und ein kapazitives Eingangsfilter. Mit dieser bewährten Bauelementkonstellation erreicht die Umrichterschaltung eine hohe Zuverlässigkeit und Lebensdauer bei günstigen Herstellungskosten. Die Serienkapazitäten sind als Resonanzkondensatoren zur Erfüllung einer Resonanzbedingung oder Quasi-Resonanzbedingung mit einem induktiven Anteil der Lasten ausgebildet, wobei für die oben erwähnte Variante I, die Resonanzfrequenz von den Schaltzuständen der Umschalter abhängt.

Vorteile und Zweckmäßigkeiten der Erfindung ergeben sich im übrigen aus den abhängigen Ansprüchen sowie der nachfolgenden Beschreibung von Ausführungsbeispielen anhand der Figuren. Von diesen zeigen:
Fig. 1 ein Schaltbild (Prinzipskizze) einer Umrichterschaltung mit N Ausgängen gemäß einer ersten Ausführungsform der Erfindung,
Fig. 2 ein Schaltbild (Prinzipskizze) einer Umrichterschaltung mit N Ausgängen gemäß einer zweiten Ausführungsform der Erfindung,
Fig. 3 ein Schaltbild der Ausführungsform nach Fig. 1 für zwei widerstandsbehaftete Induktivitäten als Lasten,
Fig. 4 ein Schaltbild der Ausführungsform nach Fig. 2 für zwei widerstandsbehaftete Induktivitäten als Lasten,
Fig. 5 Spannungs- und Stromstärke-Kurvenformen über einer RLC-Last gemäß einer neuen Steuerstrategie,
Fig. 6 die Aktivierungssignale für elektronische HF-Schalter sowie die Spannungs- und Strom-Kurvenformen über den Lasten bei einer gemäß der Strategie nach Fig. 5 gesteuerten Zwei-Ausgangs-Brücken-Topologie und
Fig. 7 ein an Fig. 6 angelehntes Timingdiagramm der Ansteuersignale für eine Umrichterschaltung zur Steuerung von zwei Lasten über vier elektronische Schalter sowie die zugehörigen Spannungs- und Stromstärke-Kurvenformen.

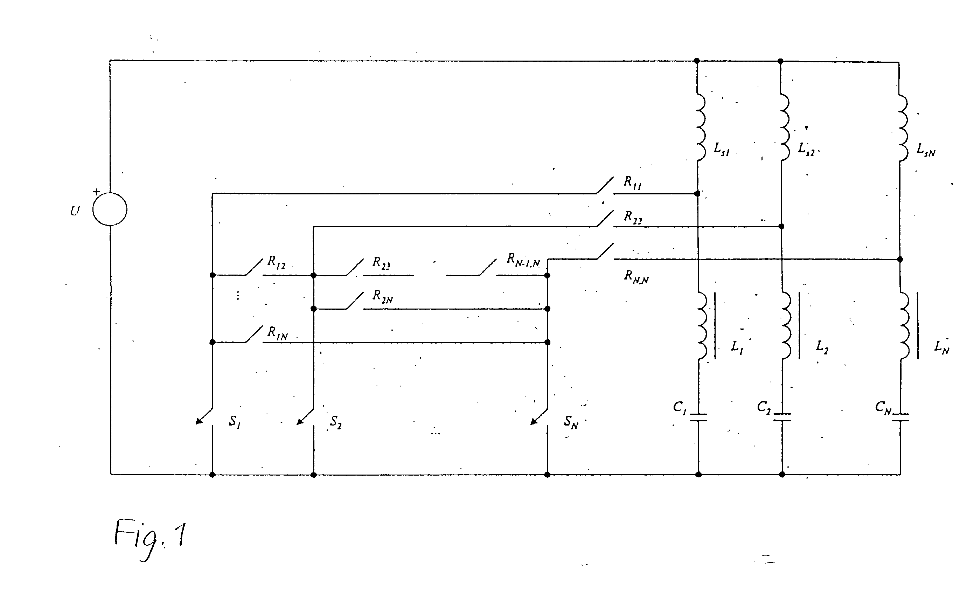

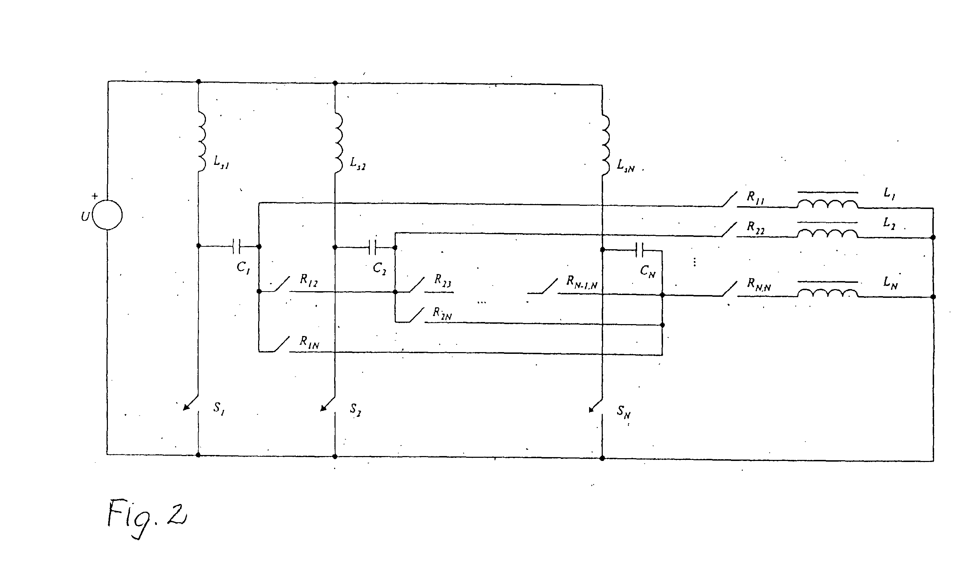

Fig. 1 und 2 zeigen in schematischen Darstellungen zwei verschiedene Ausführungen einer Umrichter- bzw. Konverterschaltung mit N Ausgängen bzw. induktiven Lasten, die mittels des oben beschriebenen Entwurfsprinzips der partiellen Duplizierung (Multiplizierung) aus einer Serien-Quasiresonanz-Inverterschaltung mit einem Ausgang abgeleitet wurden. Hierin bezeichnen U eine Spannungsquelle, L₁, L₂, ... L_{N} induktive Lasten, L_{S1}, L_{S2}, ..., L_{SN} Zusatzinduktivitäten, und C₁, C₂, ... C_{N} Serienkondensatoren bzw.-kondensatorbatterien. S₁, S₂, ..., S_{N} sind HF-Schalter, R₁₁, R₂₂, ..., R_{NN} Umschalter zum Abschalten der Induktivitäten und R₁₂ bis R_{2N} Umschalter zur Rekonfigurierung der Topologie für den Fall, daß nicht alle Induktivitäten eingeschaltet bzw. nicht sämtliche Ausgänge aktiv sind.

Bei der Ausführung nach Fig. 2 sind die Serienkondensatoren C₁ bis C_{N} neben der jeweiligen Induktivität, L₁ bis L_{N} auch in Reihe mit dem zugeordneten Ausschalter R₁₁ bis R_{NN} geschaltet, so daß die Resonanzfrequenz hier von der Aktiv/Inaktiv-Konfiguration der Induktivitäten abhängt.

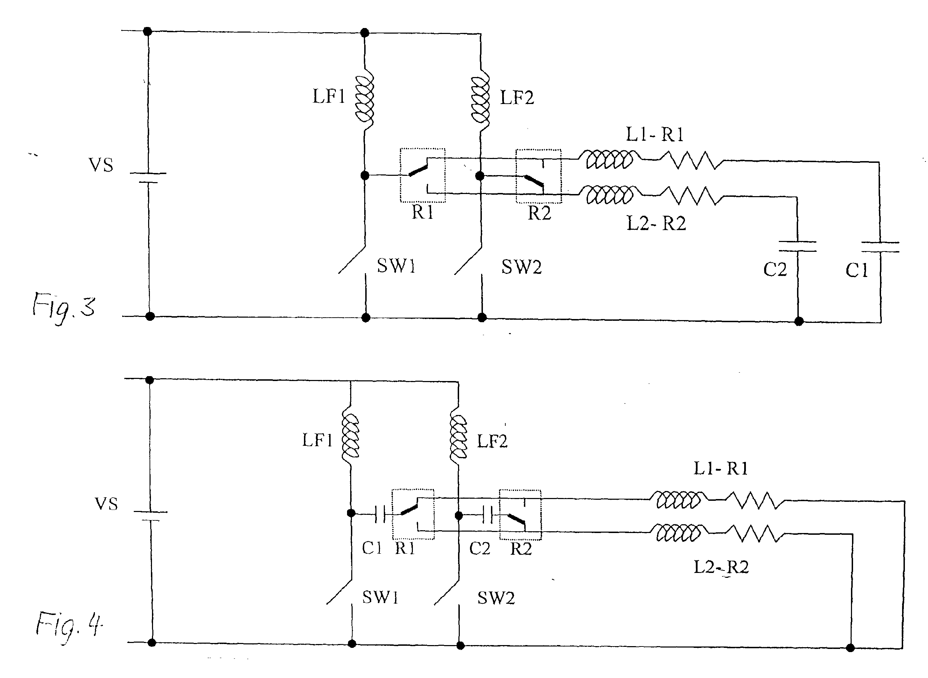

Fig. 3 und 4 zeigen spezielle Ausführungen der Prinzipschaltungen nach Fig. 1 und 2, bei denen die Spannungsquelle mit VS bezeichnet ist und jeweils induktive Eingangsfilter LF1, LF2 vorgesehen sind. Die Induktivitäten (Lasten) sind hier als widerstandsbehaftete Induktivitäten L1-R1 bzw. L2-R2 und die zugehörigen Parallel-Kondensatorbatterien mit C1 und C2 bezeichnet. In beiden Schaltungen sind zwei elektronische Schalter SW1, SW2 und zwei Umschalter (elektromechanische Relais) R1, R2 vorgesehen, die eine Parallelschaltung der Induktivitäten in vier Konfigurationsmöglichkeiten mit den HF-Schaltern SW2, SW1 verbinden.

Auch hier unterscheidet sich die zweite Variante (Fig. 4) von der ersten (Fig. 3) dadurch, daß die Resonanzfrequenz von den Aktivierungszuständen von R1 und R2 abhängt.

Die Aktivierungszustände von R1, R2 sind normalerweise geschlossen. Die Schaltstrategie für die HF-Schalter SW1, SW2 ist wie folgt: Die EIN-Zeit wird zur Variation der Ausgangsleistung gesteuert, und die AUS-Zeit wird zur Erfüllung der ZVS-Schaltbedingung für die Transistoren eingestellt.

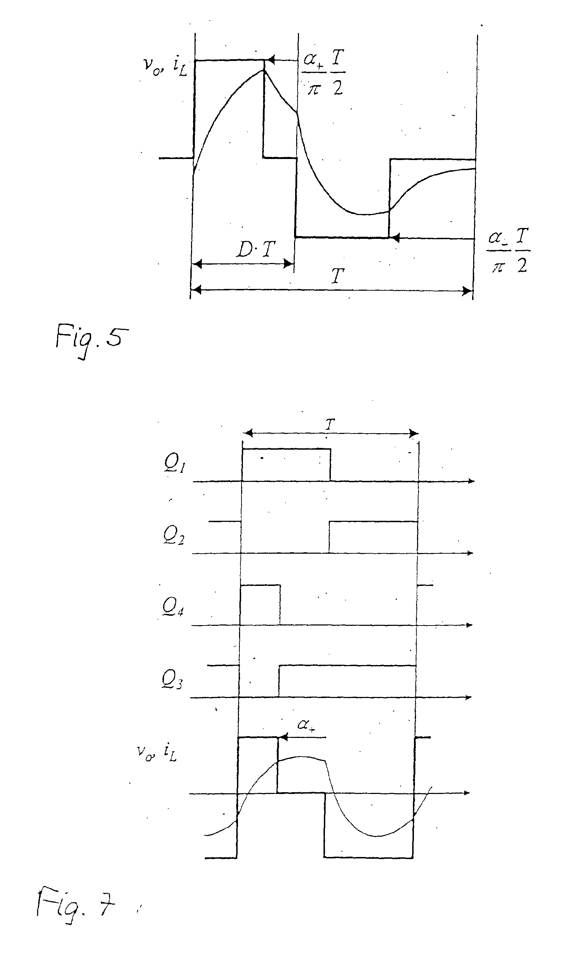

Fig. 5 zeigt die Spannungs-Kurvenform V₀ sowie Stromstärke-Kurvenform i_{L} in Abhängigkeit von der Zeit über einer RLC-Last während eines Schaltzyklus T gemäß einer bevorzugten Steuerstrategie für die vorgeschlagene Umrichterschaltung. Hierin sind D der Dienstzyklus und α₊ der Phasenwinkel in der positiven Halbperiode und α₋ der Phasenwinkel in der negativen Halbperiode.

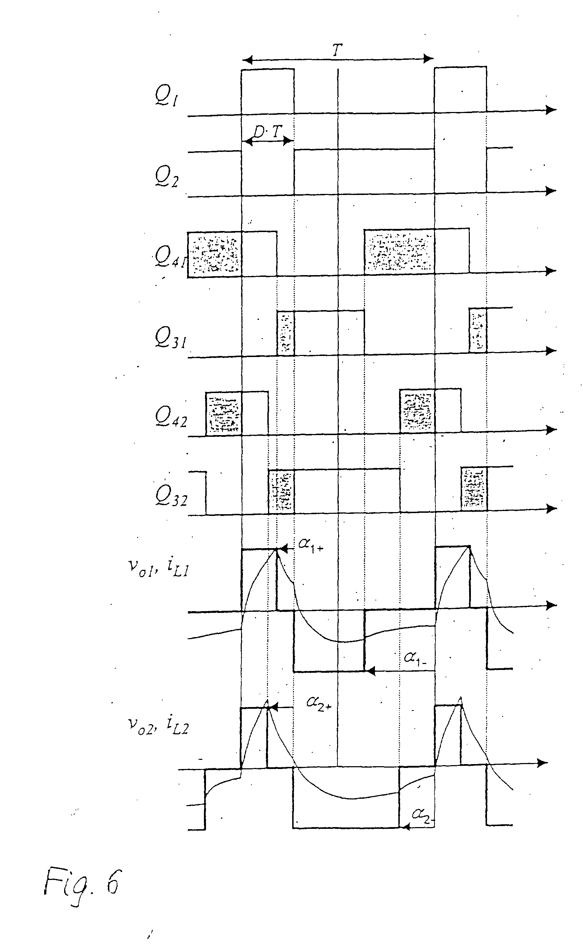

Fig. 6 zeigt in einem entsprechenden Timingdiagramm die Aktivierungssignale für sechs elektronische Schalter (Leistungs-Halbleiterbauelemente) Q₁ bis _{Q42} einer Zwei-Ausgangs-Brücken-Topologie, die gemäß dieser Steuerstrategie angesteuert wird. Die Spannungen sind mit vₒ₁, vₒ₂ und die Stromstärken über den Lasten mit i_{L1} bzw. i_{L2} bezeichnet, und α₁₊, α₂₊ bezeichnen wieder die Phasenwinkel in der positiven Halbwelle und α₁₋ bzw. α₂₋ die Phasenwinkel in der negativen Halbwelle.

Die schraffierten Bereiche haben dieselbe Bedeutung wie bei der bekannten Phasenverschiebungs-Modulation. Wie auch bei bekannten Steuerstrategien können die Schalteinrichtungen (HF-Schalter) der Topologie vom ZVS- oder ZCS-Schalttyp sein, in Abhängigkeit von den konkreten Werten von D, α₊, α₋, m und Q.

Fig. 7 zeigt in einer an Fig. 6 angelehnten schematischen Darstellung ein Timingdiagramm der Aktivierungssignale für den Spezialfall der sogenannten einpoligen Spannungsaufhebung für den elementaren Fall einer einzelnen Last und von vier Schalteinrichtungen sowie die zugehörige Spannungs- und Stromstärke-Kurvenform.

Die Ausführung der Erfindung ist nicht auf die oben beschriebenen Beispiele und hervorgehobenen Aspekte beschränkt, sondern ebenso in einer Vielzahl von Abwandlungen, sowohl hinsichtlich des Schaltungsaufbaus und des konkreten Einsatzfeldes sowie des Steuerverfahrens, möglich.

## Patentansprüche

1. Umrichterschaltung vom ZCS-Typ mit mindestens zwei Ausgängen zur Verbindung mit je einer Last (L₁...L_{N}; L1-R1, L2-R2), insbesondere einer Induktionsspule einer induktiven Kochstelle, der eine Serienkapazität (C₁...C_{N}; C1, C2) zugeordnet ist,
**dadurch gekennzeichnet, daß**
jeder Ausgang über Umschalter (R₁₁...R_{NN}; R1, R2) zur Veränderung der Topologie zur wählbaren Speisung einer Last an einem ausgewählten Ausgang oder mehrerer Lasten an mehreren Ausgängen mit einem oder mehreren elektronischen Hochfrequenzschaltern (S₁...S_{N}; SW1, SW2), deren Gesamtanzahl der Anzahl der Ausgänge entspricht, mit Leistungs-Halbleiterbauelementen verbindbar ist.

2. Umrichterschaltung nach Anspruch 1,
**gekennzeichnet durch**
zwei Ausgänge, die über zwei einpolige Umschalter (R1, R2) wahlweise mit einem von zwei elektronischen Hochfrequenzschaltern (SW1, SW2) oder beiden Hochfrequenzschaltern verbindbar sind.

3. Umrichterschaltung nach Anspruch 1 oder 2,
**dadurch gekennzeichnet, daß**
die Serienkapazitäten (C₁...C_{N}; C1, C2) über die Umschalter wahlweise mit den elektronischen Hochfrequenzschaltern (S₁...S_{N}; SW1, SW2) verbindbar sind.

4. Umrichterschaltung nach Anspruch 1 oder 2,
**dadurch gekennzeichnet, daß**
die Serienkapazitäten (C₁...C_{N}; C1, C2) permanent mit den elektronischen Hochfrequenzschaltern (S₁...S_{N}; SW1, SW2) verbunden sind.

5. Umrichterschaltung nach einem der vorangehenden Ansprüche,
**dadurch gekennzeichnet, daß**
die elektronischen Hochfrequenzschalter (S₁...S_{N}; SW1, SW2) jeweils einen Transistor und eine zu diesem antiparallel geschaltete Diode aufweisen und die Umschalter als elektromechanische Relais ausgebildet sind.

6. Umrichterschaltung nach einem der vorangehenden Ansprüche,
**dadurch gekennzeichnet, daß**
die Serienkapazitäten (C₁...C_{N}; C1, C2) als Resonanzkondensatoren zur Erfüllung einer Resonanzbedingung oder Quasi-Resonanzbedingung mit einem induktiven Anteil der Lasten ausgebildet sind, wobei die Resonanzfrequenz der Umrichterschaltung von den Schaltzuständen der Umschalter abhängig ist.

7. Umrichterschaltung nach einem der vorangehenden Ansprüche,
**gekennzeichnet durch**
ein induktives (LF) und ein kapazitives (CF) Eingangsfilter.

8. Induktionskochgerät mit einer Umrichterschaltung nach einem der vorangehenden Ansprüche und mindestens zwei induktiven Kochstellen, die jeweils mindestens eine, insbesondere spiralig in einer Ebene gewickelte, Induktionsspule als Last der Umrichterschaltung aufweisen.

9. Verfahren zum Betrieb einer Umrichterschaltung nach einem der Ansprüche 1 bis 7,
**dadurch gekennzeichnet, daß**
in jedem Betriebszustand jeweils alle Ausgänge der Umrichterschaltung mit der gleichen Frequenz versorgt werden und das Prinzip der einpoligen Spannungsaufhebung angewandt wird.
